(19) 

Europäisches Patentamt

European Patent Office

Office européen des brevets

(11) **EP 4 435 640 A1**

(12) **EUROPEAN PATENT APPLICATION**

(43) Date of publication:
**25.09.2024 Bulletin 2024/39**

(21) Application number: **23162983.3**

(22) Date of filing: **20.03.2023**

(51) International Patent Classification (IPC):
*G06F 21/16* (2013.01)       *G10L 19/018* (2013.01)
*G06N 3/045* (2023.01)       *G06F 21/10* (2013.01)

(52) Cooperative Patent Classification (CPC):
**G06F 21/16; G06F 21/1063; G06N 3/045;
G06N 3/0675; G06N 7/01; G10L 19/018**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **DeepMind Technologies Limited
London EC4A 3TW (GB)**

(72) Inventors:
• **De Balle Pigem, Borja
London, N1C 4AG (GB)**

• **Dathathri, Sumanth
London, N1C 4AG (GB)**
• **Ghaisas, Sumedh Kedar
London, N1C 4AG (GB)**
• **Huang, Po-Sen
London, N1C 4AG (GB)**
• **Kohli, Pushmeet
London, N1C 4AG (GB)**
• **See, Abigail Elizabeth
London, N1C 4AG (GB)**
• **Welbl, Johannes Maximilian
London, N1C 4AG (GB)**

(74) Representative: **Marks & Clerk GST
1 New York Street
Manchester M1 4HD (GB)**

(54) **MULTI-STAGE WATERMARKING OF A DIGITAL OBJECT GENERATED BY A MACHINE LEARNING MODEL**

(57)     Methods, systems, and apparatus, including computer programs encoded on computer storage media, for watermarking a digital object generated by a machine learning model. The digital object is defined by a sequence of tokens. The watermarking involves modifying a probability distribution of the tokens by applying a succession of watermarking stages.

FIG. 1

EP 4 435 640 A1

**Description**

BACKGROUND

This specification relates to digitally watermarking the output of machine learning models.

Machine learning models can be trained to generate a digital object, such as a passage of text or an image. Some machine learning models are parametric models and generate the output based on values of the parameters of the model. Neural networks are machine learning models that employ one or more layers of nonlinear units; deep neural networks include one or more hidden layers in addition to an output layer. Each layer of the network generates an output in accordance with current values of a respective set of parameters.

Some machine learning models generate elements of the output, herein referred to as tokens, one at a time, e.g. by sampling from a probability distribution determined by the model. Some of these models are autoregressive models, that generate a new output element, or token, conditioned on the output elements, or tokens, that have already been generated.

SUMMARY

This specification describes a method and a corresponding system, implemented as computer programs on one or more computers in one or more locations, that can watermark a digital object generated by a machine learning model. The digital object can be, e.g., a piece of text, a still or moving image, or an object representing an audio waveform, or a combination of these. The watermarking can be detected, and so it can be determined whether or not a digital object was generated by the machine learning model.

In one aspect there is described a computer-implemented method of watermarking a digital object defined by a sequence of tokens. The method generates each token of the sequence of tokens by processing preceding tokens in the sequence using a trained machine learning model, in particular an autoregressive machine learning model, to determine an initial probability distribution over possible tokens for a current token in the sequence. The method determines, more particularly selects, the current token in the sequence in accordance with a modified probability distribution over the possible tokens. The tokens may comprise, e.g., natural language tokens, such as words or wordpieces, or tokens defining image pixels or regions, or tokens characterizing an audio waveform.

In implementations the current token in the sequence is selected using a process that involves a plurality of watermarking stages, applied iteratively. More specifically each watermarking stage comprises applying, to a representation of, or to samples from, a probability distribution associated with the watermarking stage, a modification based on a respective pseudorandom function for the watermarking stage. The pseudorandom function is a function of one or more of the preceding tokens in the sequence and a supposed current token.

The probability distribution associated with a first of the watermarking stages is the initial probability distribution. The modification applied in a last of the watermarking stages results in a representation of, or sample from, the modified probability distribution.

In some implementations applying the modification to the probability distribution associated with the watermarking stage comprises selecting one or more of the samples from the probability distribution associated with the watermarking stage.

In some implementations applying the modification to the probability distribution associated with the watermarking stage involves modifying a representation of the probability distribution associated with the watermarking stage. Then the modification applied in the last watermarking stage results in a representation of the modified probability distribution over the possible tokens, and selecting the current token involves sampling from this distribution.

Particular embodiments of the subject matter described in this specification can be implemented so as to realize one or more of the following advantages.

There is a need to be able to distinguish machine-generated content from human-generated content, particularly where the machine-generated content might be misleadingly represented as human generated. As another example, human-generated content might be represented as machine-generated; or content generated by one machine might be misleadingly represented as generated by a different machine, e.g. undesirable content could be represented as having originated from a trustworthy source. Watermarking is a general technique that can be used for distinguishing between content to address such problems, but can have drawbacks.

Some implementations of the described techniques enable robust and detectable watermarking to be added to a digital object with relatively low computational overhead (depending on the number of watermarking stages applied). The watermarking is robust in the sense that it is relatively unaffected by small modifications to the content, e.g. to the text in a text object. The watermarked content can be distinguished from unwatermarked content with a relatively high degree of confidence, and the watermarking process results in little degradation of the quality of the generated content.

In broad terms implementations of the technique preferentially pick watermark-consistent continuation tokens, without significantly changing an overall token probability under the machine learning model. More specifically, some implementations of the described techniques bias the token distribution towards a secret distribution determined by the pseudorandom function associated with each watermarking stage, whilst preserving the underlying machine learning model token distribution in expectation over values of the pseudorandom function.

Implementations of the described techniques can be wrapped around any existing (autoregressive) machine learning model and are not dependent on details of the model, which can be treated as a black box. This facilitates their implementation in a wide range of settings, and retrofitting to an existing system.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE FIGURES

FIG. 1 shows an example of a generative machine learning system with watermarking.
FIG. 2 illustrates operation of a first example process for watermarking a digital object.
FIG. 3 is a flow diagram of the first example process for watermarking a digital object.
FIG. 4 is a flow diagram of a second example process for watermarking a digital object.
FIG. 5 illustrates operation of the second example process for watermarking a digital obj ect.
FIG. 6 shows example watermarking score distributions for unwatermarked and watermarked digital objects.
FIG. 7 illustrates changes in token log-probability due to watermarking.

Like reference numbers and designations in the various drawings indicate like elements.

DETAILED DESCRIPTION

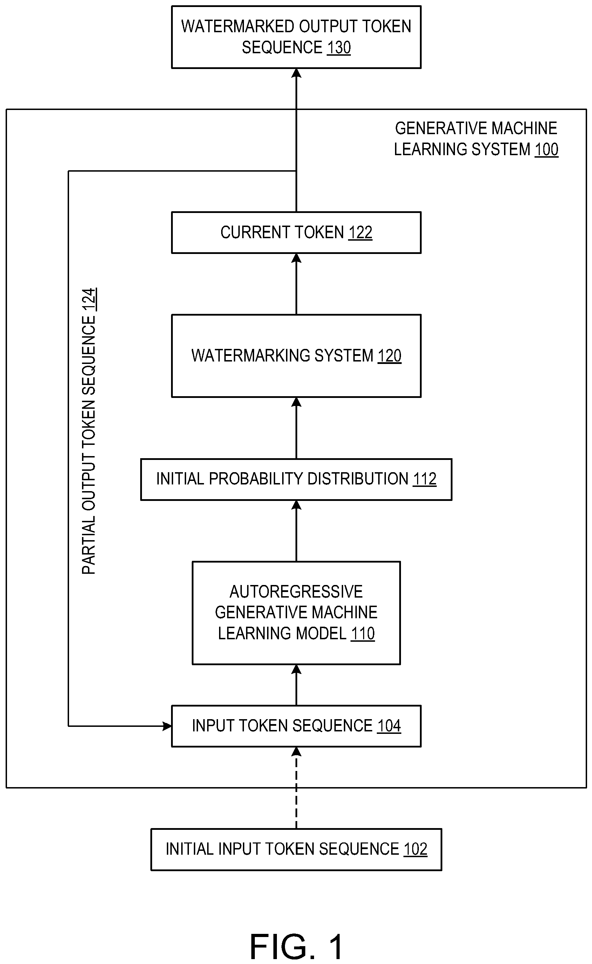

FIG. 1 shows an example of a generative machine learning system 100 including a watermarking system 120 configured to perform watermarking as described herein. The generative machine learning system 100 may be implemented as one or more computer programs on one or more computers in one or more locations.

The system 100 includes an autoregressive generative machine learning model 110, e.g. an autoregressive generative neural network, that has been trained to autoregressively generate, for each of a plurality of token generation steps, an output that defines a probability distribution over possible current output tokens at the token generation step, conditioned on output tokens that have been generated, more particularly sampled, at preceding token generation steps. The system 100 generates a watermarked output token sequence 130 defining a digital object.

In more detail, the autoregressive generative machine learning model 110 is configured to process an input token sequence 104 to define an initial probability distribution 112 over possible tokens for the current token, e.g. as a likelihood for each possible token of a set, or vocabulary, of possible tokens for the current token defined by a respective set of token scores. The initial probability distribution can be defined in a variety of ways. As one example, the initial probability distribution can be a categorical probability distribution defined by a set of token scores generated by the autoregressive generative machine learning model 110. As another example, the initial probability distribution can be a continuous probability distribution parameterized by an output of the autoregressive generative machine learning model 110, e.g. for selecting tokens representing discretized values of a continuous variable such as pixel intensity.

The initial probability distribution 112, e.g. the set of token scores, is used for selecting a current token 122 in a sequence of tokens being generated by the system. Once the current token has been selected it is added to a partial output token sequence 124, and the partial output token sequence is provided as the input token sequence 104 for selecting a next current token.

At the start of the token generation process the input token sequence 104 can be a null (empty) sequence, or it may comprise an initial input token sequence 102, such as a prompt or other input sequence. The autoregressive generation of tokens may continue until a termination criterion is reached, e.g. a specified length of sequence, or selection of an end-of-sequence token as the current token 122. The partial output token sequence 124 then provides the watermarked output token sequence 130. The system thus generates a watermarked digital object, i.e. the watermarked output token sequence 130. In general the digital object may be any type of object e.g. a text, image, audio, or multimedia object.

The initial probability distribution 112, e.g. the set of token scores, is used by the watermarking system 120, as described in more detail below, to select the current token 122 in accordance with a modified probability distribution over the possible tokens for the current token i.e. over the possible tokens that the current token can be.

In some implementations the autoregressive generative machine learning model 110 comprises a natural language generation model, in particular a natural language generation neural network. As an example, the natural language generation neural network can be a transformer-based neural network model, characterized by having a succession of self-attention neural network layers. In some of these implementations the model can include a transformer-based encoder to encode the input token sequence 104; in some other implementations such an encoder is not used. As some illustrative examples, the natural language generation neural network can be a model such as Sparrow (Glaese et al., arXiv:2209.14375), Chinchilla (Hoffmann et al., arXiv:22203.15556), PaLM (Chowdhery et al., arXiv:2204.02311), LaMDA or Bard (Thoppilan et al., arXiv:2201.08239). The natural language generation model can be any model that generates natural language, e.g. a dialog model for a conversation agent, or a question-answering model, or a neural machine translation model.

The autoregressive generative machine learning model 110 may be a multimodal model. For example it may accept a multimodal input or generate a multimodal output, e.g. including natural language.

In implementations the natural language generation model comprises a sequence-to-sequence model that receives an input sequence of natural language tokens and generates an output sequence of natural language tokens. Typically a natural language token defines a word or wordpiece (e.g. a word segment or morpheme, or a logogram or syllabogram), but it may also define a letter, or multiple words. The tokens may include tokens representing punctuation. In general the output sequence of natural language tokens is generated a token at a time, selecting the tokens from a vocabulary of possible natural language tokens.

In implementations the input sequence of natural language tokens is converted into a sequence of input embeddings that is processed by the natural language generation neural network, e.g. a transformer-based neural network, to generate the initial probability distribution over possible tokens in the vocabulary, e.g. using a softmax output layer. Where multimodal input data is processed an input image may also be represented as a sequence of embeddings, which may be combined, e.g. interleaved, with text embeddings of the natural language tokens. As used herein an embedding may comprise a vector of numeric values.

The initial input token sequence 102 can be empty or it can include, e.g., text to be translated from a natural language of the input token sequence into a different natural language for the (watermarked) output token sequence, or a natural language prompt or question to guide the (watermarked) output token sequence, or part of a preceding dialog with an agent including the natural language generation neural network.

In some implementations the autoregressive generative machine learning model 110 comprises a computer language generation model, in particular a computer language generation neural network, for automatic code generation. Then the initial input token sequence 102 can be empty or it can include, e.g., text describing or illustrating a task to be performed by a computer. The (watermarked) output token sequence can comprise tokens from a vocabulary for expressing commands to be compiled or executed by a computer system, e.g. tokens representing instructions in a computer programming or markup language, or for controlling an application program.

As another example, the autoregressive generative machine learning model 110 may comprise an image generation neural network for generating a still or moving image (video), e.g. a transformer-based model. In these implementations the tokens, i.e. image tokens, may represent image or video features, and a sequence of such tokens may represent an image or video. For example, an image may be represented as a sequence of tokens representing regions of interest in the image encoded using an encoder neural network; or the tokens may encode color or intensity values of pixels of an image. In some implementations such a model may be conditioned on a text input to generate a still or moving image that is a visualization of the text input.

As a further example, the autoregressive generative machine learning model 110 may comprise an audio generation neural network, e.g. a speech synthesis neural network. In these implementations the tokens may represent values, regions, or features of an audio waveform. For example the tokens, i.e. audio tokens, may characterize a waveform of the audio in the time domain, or in the time-frequency domain, or may characterize phonemes. The audio generation neural network may be conditioned on a text input to convert the text into audio tokens representing an audio waveform of speech corresponding to the text.

As previously described, the current token 122 is selected in accordance with a modified probability distribution over the possible tokens, using the watermarking system 120.

In some implementations this is done by selecting a plurality of samples from the initial probability distribution. In implementations the samples are sample tokens, referred to herein as tournament tokens. Then, at each of a succession of watermarking stages, the watermarking system 120 selects from amongst these until, at the last watermarking stage, a sample token is selected which is treated as the current token 122.

The selecting performed at a watermarking stage is based on a respective pseudorandom function for the watermarking stage. For example, at a watermarking stage a value of the respective pseudorandom function can be determined for each selected tournament token, and then the values compared in a tournament to select a subset of the tournament tokens for the next watermarking stage. In some implementations the watermarking process continues until only a single tournament token remains, which is used as the current token 122. The pseudorandom function can provide a discrete, e.g. binary, or continuous value output.

The aforementioned process of selecting modifies a probability distribution over the possible tokens at each watermarking stage, from the initial probability distribution to, at the end, the modified probability distribution.

In implementations the pseudorandom function is a function of one or more of, e.g. a predetermined number of, the preceding tokens in the sequence, and of a supposed current token. In this example, the supposed current token is the tournament token. In some implementations the pseudorandom function can be a function of all the preceding tokens in the sequence, e.g. where the pseudorandom function takes a variable length input.

In some other implementations the current token 122 is selected in accordance with a modified probability distribution over the possible tokens by modifying an explicit representation of the initial probability distribution 112, e.g. the set of token scores. In these implementations the representation of the initial probability distribution, e.g. the set of token scores, can be successively modified at each watermarking stage using the respective pseudorandom function, to define successive intermediate probability distributions. The modified probability distribution is obtained after the final watermarking stage, e.g. as a modified set of token scores. The current token 122 can then be sampled from the modified probability distribution.

In some implementations of both these approaches the probability distribution associated with a watermarking stage is unchanged when averaged over values of the respective pseudorandom function, that is the token distribution defined by the initial probability distribution is preserved in expectation over values of the pseudorandom function. Nonetheless the initial probability distribution is modified to bias it towards one which can be identified in the output token sequence 130, i.e. the output token sequence 130 is watermarked. More watermarking stages can result in greater bias up to a certain depth, and the greater the detectability of the watermark, though at the expense of additional computing resources.

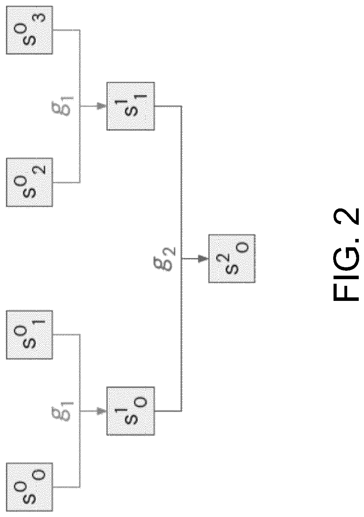

FIG. 2 illustrates the operation of a first example process for watermarking a digital object defined by a sequence of tokens. More particularly FIG. 2 illustrates, schematically, the operation of a first process for selecting the current token 122 at a token generation step.

In this example, in an initial, watermarking stage, four tournament tokens, $s_0^0, s_1^0, s_2^0, s_3^0$, are sampled from the initial probability distribution 112, e.g. as defined by the set of token scores. This initial probability distribution may be denoted $p(\cdot|x_{<t})$, where $x_{<t} = (x_1, ..., x_{t-1})$ denotes the preceding, already-generated tokens, i.e. the partial output token sequence 124. A value, $g_1$, of the pseudorandom function for the initial watermarking stage can be determined for each of these tournament tokens as described further below.

Two of these tournament tokens are selected, based on the value of the pseudorandom function for each of the tournament tokens, to provide the tournament tokens for the next watermarking stage, in FIG. 2 denoted $s_0^1, s_1^1$. As an example, this can involve making comparisons between pairs of tournament tokens, e.g. picking the tournament token with the largest value of the pseudorandom function at each comparison. A random selection can be made if the values are the same.

At the next watermarking stage a value, $g_2$, of the pseudorandom function for this watermarking stage is determined for each of tournament tokens, $s_0^1, s_1^1$, and one of these is selected as the tournament winner, in FIG. 2 $s_0^2$, and is used as the current token 122, $x_t$. This selection process results in $x_t$ being selected from the modified probability distribution. Generating successive tokens in this way results in a watermarked digital object defined by the output token sequence 130.

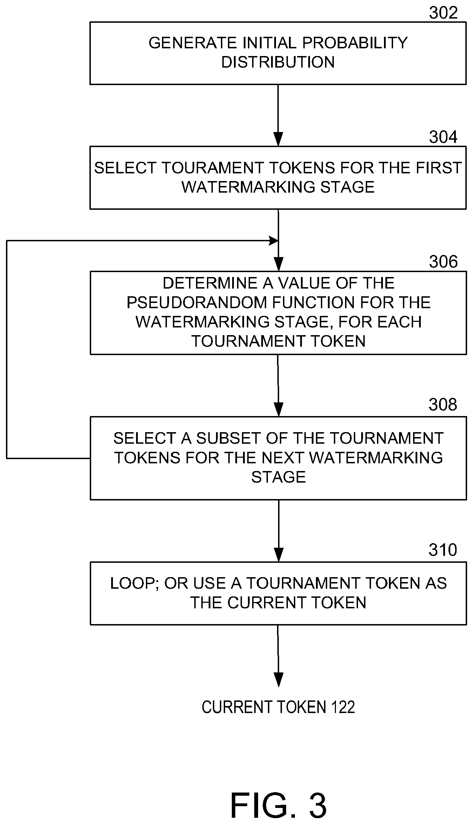

FIG. 3 is a flow diagram of a first example process for watermarking a digital object defined by a sequence of tokens that uses such an approach. The process of FIG. 3 can be performed by a system of one or more computers located in one or more locations, e.g. by the generative machine learning system 100 of FIG. 1. The watermarking process involves watermarking the digital object as it is generated, by generating the watermarked output token sequence 130. The process of FIG. 3 can be performed at each token generation step.

At step 302 the autoregressive generative machine learning model 110 processes the preceding tokens in the output sequence, that have already been generated, $x_{<t}$, i.e. the partial output token sequence 124, to generate the initial probability distribution 112, $p(\cdot|x_{<t})$, The initial probability distribution 112 can be represented as a set of token scores, as previously described, or in some other way.

The process then selects a plurality of tournament tokens for the first watermarking stage from the initial probability distribution 112 (step 304). In implementations repeated selection of the same token is allowed. For m watermarking stages $2^m$ tournament tokens can be selected initially.

A value of the pseudorandom function for the watermarking stage is then determined for each of the tournament tokens (step 306). Any suitable pseudorandom function may be used. The pseudorandom functions used at the different watermarking stages may be, but are not necessarily, different to one another.

In some implementations the pseudorandom function for a watermarking stage is a function of a supposed current token, $x_t$, and one or more of the preceding tokens, $x_{<t}$, e.g. a function of the supposed current token, $x_t$, and a property of one or more of the preceding tokens $x_{<t}$. When determining the value of the pseudorandom function for a tournament token the supposed current token, $x_t$, can be the tournament token. As examples, the pseudorandom function can have a value in the range [0,1]; or the output can be either 0 or 1.

In some implementations the pseudorandom function may comprise a cryptographic hash function, i.e. the value of the pseudorandom function may be determined from a cryptographic hash of the supposed current token and the one or more preceding tokens. In some implementations the pseudorandom function is based on a cryptographic key (a "watermarking key"), e.g., as a function of the supposed current token, the one or more of the preceding tokens, and the cryptographic key. For example the value of the pseudorandom function may be determined by encrypting the tokens, e.g. using a cryptographic algorithm, or by determining a MAC (message authentication code) value from the supposed current token and the one or more of the preceding tokens.

A subset of the tournament tokens is then selected for the next watermarking stage using the determined values of the pseudorandom function (step 308), e.g. selecting half of the tournament tokens by pairwise comparison of the values.

The process then loops back to iteratively apply the next watermarking stage or, if the last watermarking stage has been reached, e.g., if the previous step selected a single tournament token, the or one of the tournament tokens from that stage is used as the current token 122 (step 310).

The process of FIG. 3 is then performed again, to generate the next current token for the watermarked output token sequence 130 at the next token generation step until, e.g., an end of sequence token is selected as the current token 122.

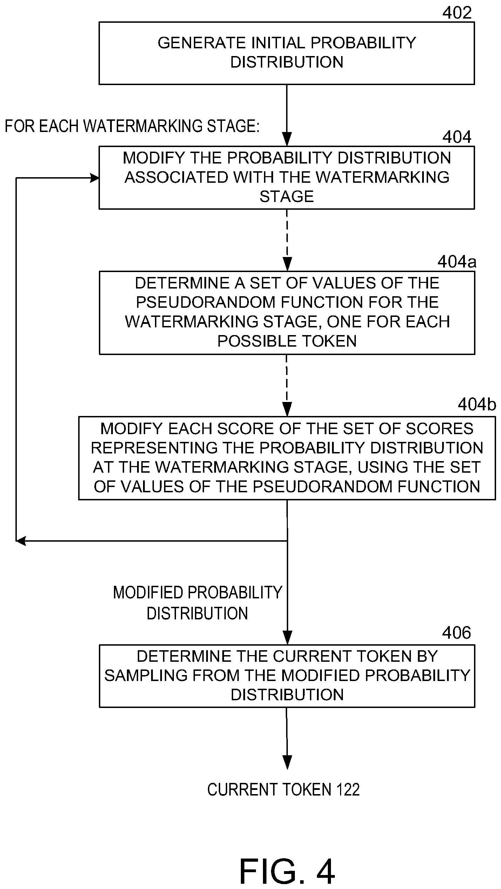

FIG. 4 is a flow diagram of a second example process for watermarking a digital object defined by a sequence of tokens. The process of FIG. 4 can be performed by a system of one or more computers located in one or more locations, e.g. by the generative machine learning system 100 of FIG. 1. Again the watermarking process involves watermarking the digital object as it is generated, by generating the watermarked output token sequence 130. The process of FIG. 4 can be performed at each token generation step.

At step 402 the autoregressive generative machine learning model 110 processes the preceding tokens in the output sequence, $x_{<t}$, i.e. the partial output token sequence 124, to generate the initial probability distribution 112, $p(\cdot|x_{<t})$. The initial probability distribution 112 may be represented, e.g., as a set of token scores as previously described or in some other way.

The process then modifies the representation of the probability distribution associated with each watermarking stage using the respective pseudorandom function for the watermarking stage to determine, at the last watermarking stage, the modified probability distribution (step 404).

In the example process of FIG. 4 modifying the representation of the probability distribution involves determining a set of pseudorandom function values, one for each of the possible tokens for the current token in the sequence, e.g. one for each of the possible tokens in the vocabulary of tokens (step 404a). The pseudorandom functions for the watermarking stages may be as previously described.

In some implementations the pseudorandom function for a watermarking stage is a function of a supposed current token, $x_t$, and of one or more of the preceding tokens, $x_{<t}$. Each of the possible tokens in the vocabulary of tokens can be used as the supposed token, to determine each value in the set of pseudorandom function values. For example for the lth watermarking stage the value of the pseudorandom function for a supposed current token, $x_t$, that is one of the possible tokens in the vocabulary may be determined as $g_l(x_t)$ (where the dependence on the preceding token(s) has been omitted for clarity).

The probability distribution at the watermarking stage is then modified. In implementations where the probability distribution is represented as a set of scores, each score of the set of scores is modified using a corresponding value in the set of pseudorandom function values (step 404b), i.e. the score for a possible token is modified using the value of the pseudorandom function with that token as the supposed current token. The process then loops back to modify the probability distribution associated with the next watermarking stage. This iteratively determines an intermediate modified probability distribution for each of the intermediate watermarking stages, until the modified probability distribution is determined at the last watermarking stage.

One way in which a score for a token can be modified is by increasing the score using a scaling factor that depends on the corresponding value in the set of pseudorandom function values. The scaling factor may also include a normalizing term, $\beta$. For example, the scaling factor can be determined as $[1 + g_l(x_t) - \beta]$. The normalizing term $\beta$ may be determined as $\Sigma \tilde{p}(x_t|x_{<t})g_l(x_t)$, where $\tilde{p}(x_t|x_{<t})$ is the intermediate modified probability distribution for the watermarking stage and the sum is over possible tokens in the vocabulary of tokens. The intermediate modified probability distribution for watermarking stage $l$ can be determined as $$\tilde{p}_l(x_t|x_{<t}) = \tilde{p}_{l-1}(x_t|x_{<t})[1 + g_l(x_t) - \beta]$$ , where

$$\widetilde{p_1}(x_t|x_{<t}) = p_{AM}(x_t|x_{<t})[1 + g_l(x_t) - \beta]$$ and $p_{AM}(x_t|x_{<t})$ is the initial probability distribution from the autoregressive generative machine learning model 110. The modified probability distribution determined at the last, mth, watermarking stage is $\tilde{p}_m(x_t|x_{<t})$.

The current token 122 is then determined by sampling from the modified probability distribution, $\tilde{p}_m(x_t|x_{<t})$, represented in this example process by a modified set of scores (step 406).

The process of FIG. 4 is then performed again to generate the next current token for the watermarked output token sequence 130 at the next token generation step until, e.g., an end of sequence token is selected as the current token 122.

Where values of the pseudorandom function are {0,1} the processes of FIGS. 3 and 4 are equivalent.

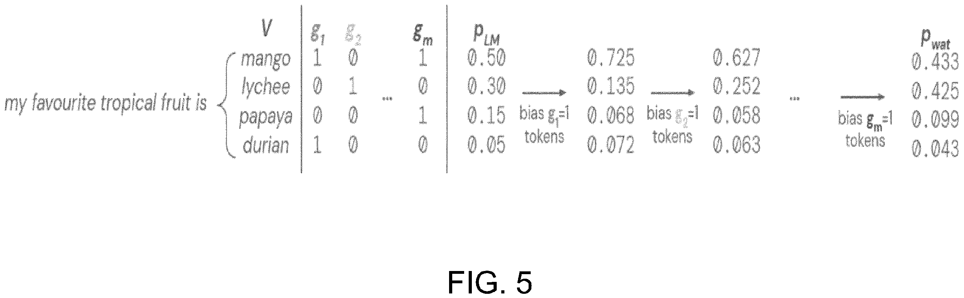

FIG. 5 illustrates operation of the second example process for watermarking a digital object. In the toy example of FIG. 5 the initial probability distribution is denoted $p_{LM}$ and the possible tokens of the vocabulary of tokens, $V$, are "mango", "lychee", "papaya", and "durian". Values of the pseudorandom function for the first watermarking stage, $g_1$ for each possible token 1, 0, 0, 1, modify $p_{LM}$ from an initial set of scores 0.50, 0.30, 0.15, 0.05 to a modified set of scores 0.725, 0.135, 0.068, 0.072 representing an intermediate (normalized) probability distribution, $\tilde{p}_1$. These are obtained by applying the scaling factor $[1 + g_l(x_t) - \beta]$ with normalization $\beta = 0.55$. The probability scores for each successive watermarking stage is modified in a corresponding manner. The modified probability distribution is denoted $p_{wat}$; in expectation over the pseudorandom functions $g$, $p_{wat} = p_{LM}$.

The watermark can be detected using the same pseudorandom function(s) that were used to create it. More particularly this can be done by determining a watermarking score using the pseudorandom function(s). The watermarking score obtained by processing the outputs from the pseudorandom function(s) can then be compared with a threshold to detect watermarking of the digital object. The threshold can be determined empirically, e.g. based on an ROC (receiver operating characteristic) curve, e.g. based on the AUC (area under the ROC), for a particular true or false positive rate, or precision.

The processing of the outputs from the pseudorandom function can be done by taking an average across the layers and the length of the sequence, or by taking a weighted average in which the contributions from one or more of the deeper (earlier) layers are given less weight than those from one or more of the shallower (later) layers.

For a digital object defined by a sequence of tokens the watermarking score can be determined by summing score contributions dependent on the pseudorandom functions. The sum is taken over i) each of the predetermined number of watermarking stages, and ii) each subsequence of a set of sub-sequences of the tokens, where each sub-sequence is used for determining a value of the pseudorandom function for the watermarking stage. Each score contribution can be, but is not necessarily, the value of the pseudorandom function for a sub-sequence; in general it is determined based on the value of the pseudorandom function for a sub-sequence.

In general each sub-sequence is a subsequence from the sequence of tokens. In some implementations, but not necessarily, each sub-sequence comprises consecutive tokens of the sequence of tokens, each sub-sequence starting at a different respective token of the sequence of tokens. One way of determining the set of sub-sequences of the tokens is to base each subsequence on a different respective base token of the sequence of tokens making up the digital object. The different respective base tokens may define successive tokens of the sequence of tokens making up the digital object. Each subsequence may comprise a predetermined number of tokens of the sequence of tokens, e.g. tokens up to, or from, this base token; or the subsequence may comprise all the tokens up to this base token. In particular, where the watermark was generated by determining the value of a respective pseudorandom function for the watermarking stage as function of a supposed current token and of one or more of the preceding tokens in the sequence, the subsequence may comprise the same total number of tokens as were input to the pseudorandom function when the watermark was generated.

In some implementations the score contributions for each particular watermarking stage are summed to determine a respective watermarking stage sum, by summing the score contributions based on the determined values of the pseudorandom function associated with the particular watermarking stage. Then the watermarking stage sums are summed to determine the watermarking score.

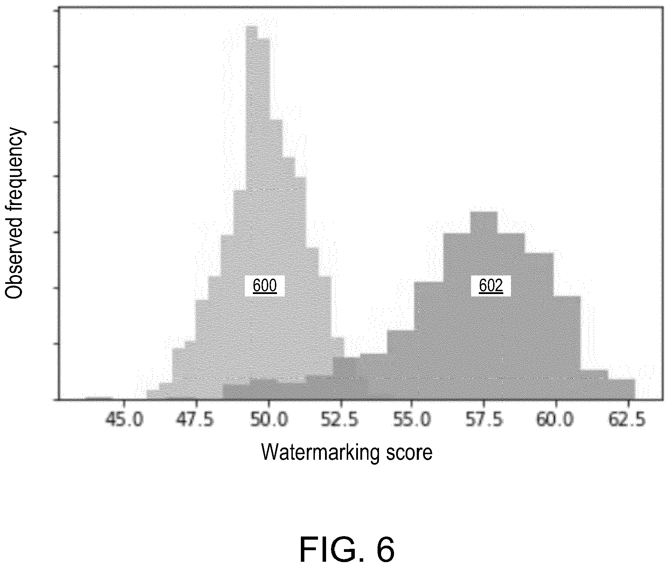

FIG. 6 shows example distributions of watermarking scores for unwatermarked digital objects 600 and for watermarked digital objects 602, with watermarking score on the x-axis and observed frequency on the y-axis. The distributions are well-separated indicating effective watermarking.

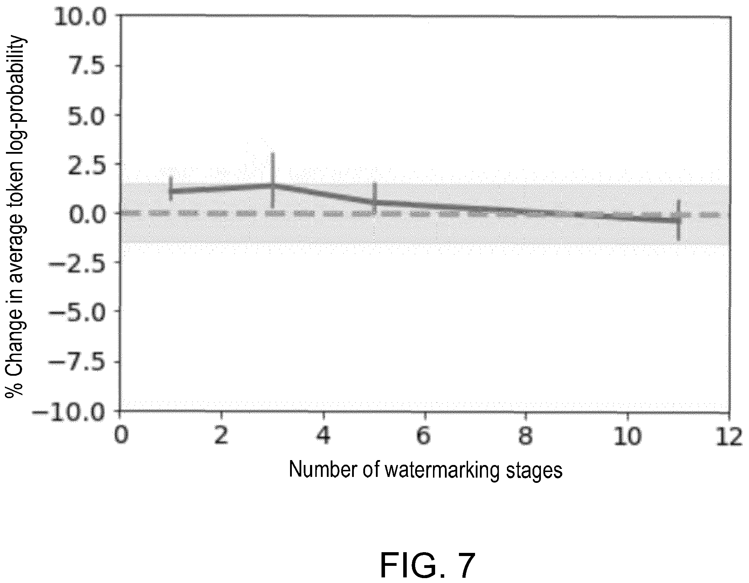

FIG. 7 shows, as the solid line, a percentage change, relative to an unwatermarked model, in average watermarked token log-probability on the y-axis, for different numbers of watermarking stages on the x-axis. FIG. 7 suggests that the watermarking process has little or no overall deleterious effect.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The typical elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1.   A computer-implemented method of watermarking a digital object, wherein the digital object is defined by a sequence of tokens, the method comprising:

generating each token of the sequence of tokens by:

processing preceding tokens in the sequence, using a trained machine learning model, to determine an initial probability distribution over possible tokens for a current token in the sequence; and
selecting the current token in the sequence in accordance with a modified probability distribution over the possible tokens; wherein

selecting the current token in the sequence in accordance with the modified probability distribution comprises iteratively, for each of a plurality of watermarking stages:

applying, to a representation of, or to samples from, a probability distribution associated with the watermarking stage, a modification based on a respective pseudorandom function for the watermarking stage, wherein the pseudorandom function is a function of one or more of the preceding tokens in the sequence and a supposed current token; and wherein

the probability distribution associated with a first of the watermarking stages is the initial probability distribution, and the modification applied in a last of the watermarking stages results in a representation of, or sample from, the modified probability distribution.

2. The method of claim 1, comprising applying the modification to the samples from the probability distribution associated with the watermarking stage; and wherein applying the modification comprises selecting one or more of the samples from the probability distribution associated with the watermarking stage.

3. The method of claim 2 further comprising:

determining, for each of a plurality of tournament tokens, a value of the respective pseudorandom function for the watermarking stage, based on the one or more preceding tokens in the sequence and using the tournament token as the supposed current token,

wherein the tournament tokens comprise the samples from a probability distribution associated with the watermarking stage; and

selecting a subset of one or more of the tournament tokens based on the value of the respective pseudorandom function for each of the tournament tokens.

4. The method of claim 3, wherein determining the plurality of tournament tokens associated with the first of the watermarking stages comprises sampling from the initial probability distribution.

5. The method of claim 4, further comprising:

after the first of the watermarking stages, using the tournament tokens selected in the previous watermarking stage as the plurality of tournament tokens associated with the watermarking stage.

6. The method of claim 3, 4, or 5, wherein selecting the current token in the sequence comprises:

selecting, for the last of the watermarking stages, one of the tournament tokens as the current token in the sequence.

7. The method of claim 1, comprising:

applying the modification based on the respective pseudorandom function to the representation of the probability distribution associated with each of the plurality of watermarking stages by, for each of the plurality of watermarking stages, modifying the representation of the probability distribution using the respective pseudorandom function; and

determining the modified probability distribution as a result of modifying the representation of the probability distribution in the last of the watermarking stages; and wherein

selecting the current token in the sequence comprises sampling from the modified probability distribution.

8. The method of claim 7, wherein the representation of the probability distribution comprises a set of scores, one for each of the possible tokens for the current token in the sequence, and wherein modifying the probability distribution using the respective pseudorandom function comprises:

determining a modified set of scores by:

determining a set of pseudorandom function values, one for each of the possible tokens for the current token in the sequence, each pseudorandom function value of the set of pseudorandom function values comprising a value of the respective pseudorandom function for the watermarking stage based on the one or more preceding tokens in the sequence and on one of the possible tokens as the supposed current token;

modifying each score of the set of scores using a corresponding one of the set of pseudorandom function values.

9. The method of claim 8 wherein determining the initial probability distribution comprises determining an initial set of scores using the trained machine learning model.

10. The method of claim 8 or 9, wherein modifying each score of the set of scores using a corresponding one of the set of pseudorandom function values comprises:
increasing each score of the set of scores, using a scaling factor based on a corresponding one of the set of pseudorandom function values and a normalizing term.

11. The method of any one of claims 7-10, wherein modifying the representation of the probability distribution using the respective pseudorandom function includes constraining the modifying such that the probability distribution associated with the watermarking stage is unchanged when averaged over values of the respective pseudorandom function.

12. The method of any one of claims 7-11, wherein the pseudorandom function has a binary value; or wherein the pseudorandom function has a continuous value.

13. The method of any one of claims 7-12,

wherein the digital object comprises a portion of text, wherein the trained machine learning model comprises a trained language generation neural network, and wherein the tokens comprise natural language tokens from a vocabulary of possible natural language tokens; or
wherein the digital object comprises a still or moving image, wherein the trained machine learning model comprises a trained image generation neural network, and the tokens define pixels or regions of a generated image; or
wherein the digital object comprises data representing an audio waveform, wherein the trained machine learning model comprises a trained audio generation neural network, and the tokens define values, features, or regions of the audio waveform.

14. A computer-implemented method of detecting watermarking of a digital object, wherein the digital object is defined by a sequence of tokens, the method comprising:

determining a watermarking score for the digital object; and
comparing the watermarking score with a threshold to detect watermarking of the digital object; wherein determining the watermarking score for the digital object comprises:

determining a set of sub-sequences of the sequence of tokens, each sub-sequence starting at a different respective token of the sequence of tokens;
for each of a predetermined number of watermarking stages: determining a value of a pseudorandom function associated with the watermarking stage for each subsequence of the set of sub-sequences; and
summing score contributions based on the determined values of the pseudorandom function over i) each of the predetermined number of watermarking stages, and ii) each subsequence of the set of sub-sequences, to determine the watermarking score.

15. The method of claim 14, wherein summing the score contributions includes applying a weighting according to the watermarking stage.

16. One or more computer storage media storing instructions that when executed by one or more computers cause the one or more computers to perform the operations of the respective method of any one of claims 1-15.

17. A system comprising:

one or more computers; and
one or more storage devices communicatively coupled to the one or more computers, wherein the one or more storage devices store instructions that, when executed by the one or more computers, cause the one or more computers to perform operations of the respective method of any one of claims 1-15.

FIG. 1

FIG. 2

```
                                              302
┌─────────────────────────────────────────┐
│      GENERATE INITIAL PROBABILITY         │
│            DISTRIBUTION                    │
└─────────────────────────────────────────┘
                    │
                    ▼                         304
┌─────────────────────────────────────────┐
│  SELECT TOURAMENT TOKENS FOR THE FIRST    │
│         WATERMARKING STAGE                 │
└─────────────────────────────────────────┘
                    │
                    ▼                         306
┌─────────────────────────────────────────┐
│        DETERMINE A VALUE OF THE            │
│    PSEUDORANDOM FUNCTION FOR THE           │
│   WATERMARKING STAGE, FOR EACH             │
│         TOURNAMENT TOKEN                   │
└─────────────────────────────────────────┘
                    │
                    ▼                         308
┌─────────────────────────────────────────┐
│  SELECT A SUBSET OF THE TOURNAMENT         │
│  TOKENS FOR THE NEXT WATERMARKING          │
│            STAGE                           │
└─────────────────────────────────────────┘
                    │
                    ▼                         310
┌─────────────────────────────────────────┐
│  LOOP; OR USE A TOURNAMENT TOKEN AS        │
│         THE CURRENT TOKEN                  │
└─────────────────────────────────────────┘
                    │
                    ▼
          CURRENT TOKEN 122
```

# FIG. 3

402

GENERATE INITIAL PROBABILITY
DISTRIBUTION

FOR EACH WATERMARKING STAGE:

404

MODIFY THE PROBABILITY DISTRIBUTION
ASSOCIATED WITH THE WATERMARKING
STAGE

404a

DETERMINE A SET OF VALUES OF THE
PSEUDORANDOM FUNCTION FOR THE
WATERMARKING STAGE, ONE FOR EACH
POSSIBLE TOKEN

404b

MODIFY EACH SCORE OF THE SET OF SCORES
REPRESENTING THE PROBABILITY DISTRIBUTION
AT THE WATERMARKING STAGE, USING THE SET
OF VALUES OF THE PSEUDORANDOM FUNCTION

MODIFIED PROBABILITY
DISTRIBUTION

406

DETERMINE THE CURRENT TOKEN BY
SAMPLING FROM THE MODIFIED PROBABILITY
DISTRIBUTION

CURRENT TOKEN 122

# FIG. 4

| V | $g_1$ | $g_2$ | ... | $g_m$ | $p_{LM}$ | | | | | $p_{wat}$ |
|---|---|---|---|---|---|---|---|---|---|---|
| mango | 1 | 0 | | 1 | 0.50 | | 0.725 | | 0.627 | 0.433 |
| lychee | 0 | 1 | ... | 0 | 0.30 | bias $g_1$=1 | 0.135 | bias $g_2$=1 | 0.252 | 0.425 |
| papaya | 0 | 0 | | 1 | 0.15 | tokens | 0.068 | tokens | 0.058 | 0.099 |
| durian | 1 | 0 | | 0 | 0.05 | | 0.072 | | 0.063 | 0.043 |

my favourite tropical fruit is

bias $g_m$=1 tokens

FIG. 5

FIG. 6

FIG. 7

| | Europäisches Patentamt European Patent Office Office européen des brevets | **EUROPEAN SEARCH REPORT** | Application Number EP 23 16 2983 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/067842 A1 (REVITAL DAN [IL] ET AL) 4 March 2021 (2021-03-04) * paragraph [0030] – paragraph [0108] * ----- | 1-17 | INV. G06F21/16 G10L19/018 G06N3/045 |
| X | JOHN KIRCHENBAUER ET AL: "A Watermark for Large Language Models", ARXIV.ORG, CORNELL UNIVERSITY LIBRARY, 201 OLIN LIBRARY CORNELL UNIVERSITY ITHACA, NY 14853, 24 January 2023 (2023-01-24), XP091420185, * page 1 – page 3 * ----- | 1-17 | G06F21/10 |
| X | US 2005/089192 A1 (HAITSMA JAAP A [NL] ET AL) 28 April 2005 (2005-04-28) * paragraph [0004] – paragraph [0037] * ----- | 14-17 | |
| A | WO 2022/171635 A1 (DEEPMIND TECH LTD [GB]) 18 August 2022 (2022-08-18) * paragraph [0018] – paragraph [0093] * ----- | 1-17 | |

| | | | TECHNICAL FIELDS SEARCHED (IPC) |
|---|---|---|---|
| | | | G10L G06F G06N |

The present search report has been drawn up for all claims

| Place of search | Date of completion of the search | Examiner |
|---|---|---|
| Munich | 11 October 2023 | Hou, Jie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................
& : member of the same patent family, corresponding document

EPO FORM 1503 03.82 (P04C01)

Europäisches
Patentamt

European
Patent Office

Office européen
des brevets

Application Number

**EP 23 16 2983**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

20

Europäisches
Patentamt

European
Patent Office

Office européen
des brevets

# LACK OF UNITY OF INVENTION
## SHEET B

The Search Division considers that the present European patent application does not comply with the requirements of unity of invention and relates to several inventions or groups of inventions, namely:

```
    1. claims: 1-13(completely); 16, 17(partially)

        Method, storage media and system for generating a watermark
        for a digital object.
                        ---


    2. claims: 14, 15(completely); 16, 17(partially)

        Method, storage media and system for detecting a generated
        watermark on a digital object.
                        ---
```

**ANNEX TO THE EUROPEAN SEARCH REPORT
ON EUROPEAN PATENT APPLICATION NO.**     EP 23 16 2983

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2023

| Patent document cited in search report | Publication date | Patent family member(s) | | Publication date |
|---|---|---|---|---|
| US 2021067842 A1 | 04-03-2021 | EP | 4022501 A2 | 06-07-2022 |
| | | US | 2021067842 A1 | 04-03-2021 |
| | | WO | 2021041679 A2 | 04-03-2021 |
| US 2005089192 A1 | 28-04-2005 | AT | 422282 T | 15-02-2009 |
| | | AT | E381209 T1 | 15-12-2007 |
| | | AT | E388582 T1 | 15-03-2008 |
| | | AU | 2437499 A | 20-09-1999 |
| | | BR | 9904848 A | 31-08-2004 |
| | | CN | 1266586 A | 13-09-2000 |
| | | CN | 1266587 A | 13-09-2000 |
| | | CN | 1269098 A | 04-10-2000 |
| | | CN | 1269099 A | 04-10-2000 |
| | | DE | 69937712 T2 | 27-11-2008 |
| | | DE | 69938278 T2 | 05-03-2009 |
| | | EP | 0981900 A2 | 01-03-2000 |
| | | EP | 0981901 A2 | 01-03-2000 |
| | | EP | 0981902 A2 | 01-03-2000 |
| | | EP | 0981903 A2 | 01-03-2000 |
| | | ES | 2297919 T3 | 01-05-2008 |
| | | ID | 23884 A | 25-05-2000 |
| | | JP | 4364948 B2 | 18-11-2009 |
| | | JP | 4364949 B2 | 18-11-2009 |
| | | JP | 4428728 B2 | 10-03-2010 |
| | | JP | 2001525151 A | 04-12-2001 |
| | | JP | 2001525152 A | 04-12-2001 |
| | | JP | 2001525153 A | 04-12-2001 |
| | | JP | 2002503431 A | 29-01-2002 |
| | | KR | 20010012213 A | 15-02-2001 |
| | | KR | 20010012214 A | 15-02-2001 |
| | | KR | 20010012245 A | 15-02-2001 |
| | | KR | 20010012250 A | 15-02-2001 |
| | | PL | 336841 A1 | 17-07-2000 |
| | | PL | 336845 A1 | 17-07-2000 |
| | | RU | 2222114 C2 | 20-01-2004 |
| | | US | 6477431 B1 | 05-11-2002 |
| | | US | 6505223 B1 | 07-01-2003 |
| | | US | 6971011 B1 | 29-11-2005 |
| | | US | 7191334 B1 | 13-03-2007 |
| | | US | 2003086587 A1 | 08-05-2003 |
| | | US | 2005089192 A1 | 28-04-2005 |
| | | WO | 9945704 A2 | 10-09-1999 |
| | | WO | 9945705 A2 | 10-09-1999 |
| | | WO | 9945706 A2 | 10-09-1999 |
| | | WO | 9945707 A2 | 10-09-1999 |

EPO FORM P0459

For more details about this annex : see Official Journal of the European Patent Office, No. 12/82

**page 1 of 2**

**ANNEX TO THE EUROPEAN SEARCH REPORT
ON EUROPEAN PATENT APPLICATION NO.**

EP 23 16 2983

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2023

| Patent document cited in search report | Publication date | Patent family member(s) | | Publication date |
|---|---|---|---|---|
| WO 2022171635 A1 | 18-08-2022 | EP | 4264501 A1 | 25-10-2023 |
| | | WO | 2022171635 A1 | 18-08-2022 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GLAESE et al.** *arXiv:2209.14375*
- **HOFFMANN et al.** *arXiv:22203.15556*
- **CHOWDHERY et al.** *arXiv:2204.02311*
- **THOPPILAN et al.** *arXiv:2201.08239*